# EUROPÄISCHE PATENTSCHRIFT

(11) **EP 0 996 492 B1**
(45) Veröffentlichungstag und Bekanntmachung des Hinweises auf die Patenterteilung: **27.06.2001**
(21) Anmeldenummer: 98952710.6
(22) Anmeldetag: 16.10.1998
(51) Int. Cl.: B01D 24/46

(54) **FILTERDÜSE**
FILTER NOZZLE
AJUTAGE FILTRANT

(30) Priorität: 28.01.1998 DE 19803118
(43) Veröffentlichungstag der Anmeldung: 03.05.2000
(73) Patentinhaber: Kleemeier Schewe & Co. KSH GMBH, 32051 Herford (DE)
(72) Erfinder: SCHEWE, Ralf, D-32120 Hiddenhausen (DE)
(74) Vertreter: Patentanwälte Dipl.-Ing. Bodo Thielking Dipl.-Ing. Otto Elbertzhagen
(86) Internationale Anmeldenummer: EP9806578
(87) Internationale Veröffentlichungsnummer: WO9938596

(56) Entgegenhaltungen:
- CH-A- 201 278
- DE-B- 1 212 498
- US-A- 1 926 557
- GEERING F: "DIE RICHTIGE FILTERDUESE IST MITENTSCHEIDEND FUER DIE GUTE FILTRIERUNG DES TRINK- UND ABWASSERS" GWF WASSER ABWASSER, Bd. 137, Nr. 7, Juli 1996, Seiten 381-386, XP000627303

## Beschreibung

### TECHNISCHES GEBIET

Die Erfindung betrifft eine Filterdüse nach dem Oberbegriff des Patentanspruchs 1.

### STAND DER TECHNIK

Bei einer bekannten Filterdüse dieser Art (Zeitschrift "gwa" 11/97, Seiten 786 bis 790) weisen die Lamellen in axialer Richtung verlaufende Durchbrüche und Stege auf. Diese sollen beim Rückspülen vertikale, axiale und radiale Strömungen entstehen lassen, die die Lamellen in Drehung versetzen können sollen. Eine solche Drehung soll in Verbindung mit den Strömungsverhältnissen in den Durchbrüchen für eine Reinigung der Lamellen von Ablagerungen sorgen. Da sich die Strömungsverhältnisse bei der bekannten Lösung zufällig ergeben und weitgehend von den herrschenden Drücken beeinflußt werden, ist eine Drehung der Lamellen nicht unter allen Bedingungen sichergestellt.

Es ist auch bereits eine Filterdüse bekannt (DE 296 09 928 U1), bei der die Lamellen lose zwischen einem unteren und einem oberen Abschlußflansch des Düsenkopfes so gelagert sind, daß sie lose aufeinander liegen. Die lose Ausrichtung der Lamellen zwischen dem oberen Abschlußflansch und dem unteren Flansch soll sicherstellen, daß die Lamellen beim Rückspülen Bewegungen ausführen können, die erforderlich sind, um Teilchen zu entfernen, die sich in der Düse zwischen den Lamellen festgesetzt haben. Bei dieser bekannten Filterdüse wird eine Drehung der Lamellen beim Rückspülen der Filterdüse nicht angestrebt, sie erfolgt bei dieser Lösung auch nicht.

### DIE ERFINDUNG

Ausgehend von dem eingangs geschilderten Stand der Technik liegt der Erfindung die Aufgabe zugrunde, eine Filterdüse der als bekannt vorausgesetzten Art so auszubilden, daß die gewünschte Drehung der Lamellen sichergestellt ist.

Die Lösung dieser Aufgabe erfolgt durch die Merkmale des Patentanspruchs 1.

Bevorzugte Ausgestaltungen der Erfindung sind in den Unteransprüchen beschrieben.

Die erfindungsgemäße Anordnung und Ausbildung der Abstandshalter führt wegen der Tatsache, daß die Ausströmung der Spülflüssigkeit beim Rückspülen vom Zentrum radial erfolgt, zum Auftreffen auf eine gegenüber der Ausströmrichtung geneigte Seitenfläche mit der Folge, daß ein Drehen der Lamelle verursacht wird, wie es auch bei Turbinenlaufrädern erzeugt wird.

Ein Wechsel der Neigungsrichtung von Schaufeln benachbarter Lamellen führt dazu, daß auf benachbarte Lamellen Drehkräfte in unterschiedliche Drehrichtungen ausgeübt werden, so daß sich benachbarte Lamellen in entgegengesetzte Richtungen drehen. Dadurch können Ablagerungen zwischen den Lamellen abgerieben werden.

### KURZBESCHREIBUNG DER ZEICHNUNGSABBILDUNG

Nachstehend wird die Erfindung anhand der Zeichnungen, die ein bevorzugtes Ausführungsbeispiel zeigen, näher erläutert. Es zeigen:

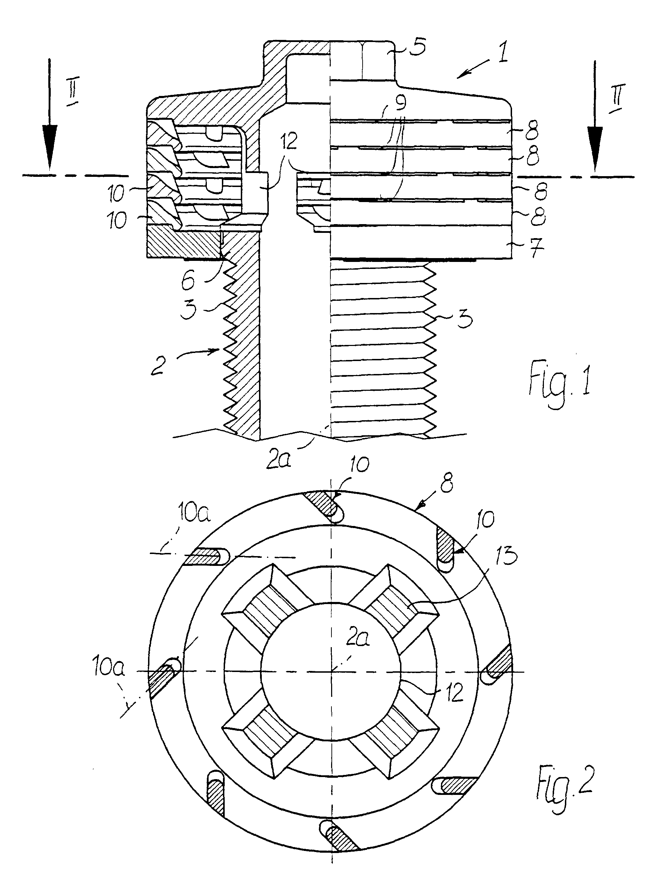

- Figur 1 -: eine in der linken Hälfte im Längsschnitt dargestellte Seitenansicht einer Filterdüse,
- Figur 2 -: einen Schnitt entlang Ebene II-II in Fig. 1,
- Figur 3 -: eine in der linken Hälfte geschnitten dargestellte Seitenansicht eines Bestandteils der Filterdüse,
- Figur 4 -: einen Schnitt entlang Ebene IV-IV in Fig. 3,
- Figur 5 -: eine Draufsicht auf einen zur Auflage auf einen Filterboden ausgebildeten Anlageflansch,
- Figur 6 -: eine in der linken Hälfte geschnitten dargestellte Seitenansicht des Anlageflansches gem. Fig. 5,
- Figur 7 -: einen perspektivisch dargestellten Teilausschnitt einer Lamelle mit Schaufeln in einer ersten Richtung,
- Figur 8 -: eine zu Fig. 7 korrespondierende Darstellung einer Lamelle mit in Gegenrichtung orientierten Schaufeln.

### BESTER WEG ZUR AUSFÜHRUNG DER ERFINDUNG

Die Filterdüse weist einen Düsenkopf 1 und ein Abflußrohr 2 auf. Das Abflußrohr 2 ist an seinem Außenumfang mit Gewinde 3 versehen und mit einem Abschlußflansch 4 einstückig ausgebildet. Der Abschlußflansch 4 trägt einen Schlüsselansatz 5, der das Verschrauben mit einem Gegengewinde erleichtert, das entweder in dem Filterboden einer Filteranlage vorgesehen ist oder von dem Innengewinde einer nicht dargestellten, von der Unterseite des Filterbodens aufgeschraubten Mutter gebildet wird. Das Gewinde 3 endet an seiner Oberseite in einem Ringbereich 6, der zur Aufnahme eines aufsteckbaren und aufrastbaren Auflageflansches 7 mit einer Nut 11 versehen ist.

Zwischen dem Ringbereich 6 und dem Abschlußflansch 4 ist der Düsenkopf von gleichmäßig über den Umfang verteilten Abflußöffnungen 12 durchsetzt. Zwischen dem Auflageflansch 7 und dem Abschlußflansch 4 sind ringförmige Lamellen 8 angeordnet, die auf ihrer Oberseite Schaufeln 10 (Fig. 7) bzw. 10' (Fig. 8) tragen. Die Schaufeln 10 bzw. 10' stehen über die Lamellenoberseite 14 vor und liegen an der Unterseite der jeweils benachbarten Lamelle 8 an. Sie bilden zwischen den benachbarten Lamellen einen umlaufenden Ringspalt 9, der sich radial nach innen erweitert. Auf der den Schaufeln 10 bzw. 10' abgewandten Seite haben die Lamellen 8 auf ihrer Unterseite eine Zentrierrippe 15, welche die Schaufeln 10 bzw. 10' der darunter liegenden, benachbarten Lamelle 8 übergreifen und an deren innerer Anlagefläche anliegen. Die Lamellen 8 sind also über die umlaufende Zentrierrippe 15 und die Innenseitenbereiche der Schaufeln 10 bzw. 10' zentriert.

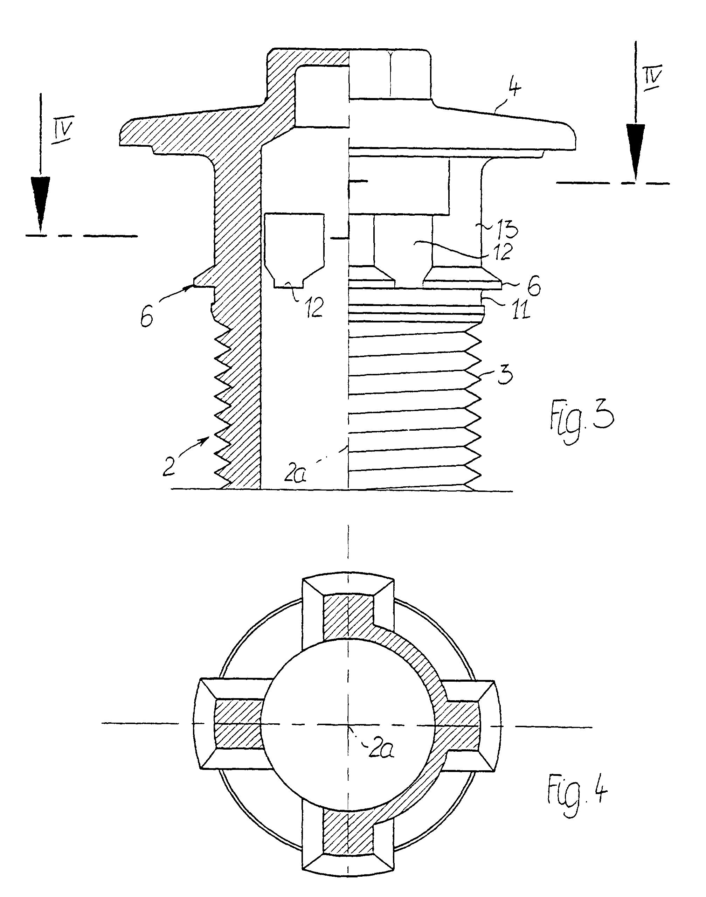

Die Schaufeln 10 sind mit ihrer senkrechten Längsmittelebene 10a (vgl. Fig. 2) gegenüber einer vertikalen radialen Längsebene durch eine zentrale Mittelachse 2a und die jeweilige Schaufel 10 bzw. 10' geneigt angeordnet. Es wird deshalb entweder einströmende, zu filtrierende Flüssigkeit oder radial ausströmendes Spülmittel umgelenkt und damit eine tangentiale Kraftkomponente auf die Lamellen 8 ausübt, welche zum Drehen der Lamelle 8 um die Mittelachse 2a führt.

Die über den Umfang verteilten Abflußöffnungen 12 lassen Rippen 13 zwischen sich stehen. Es ist damit der Abschlußflansch 4 einstückig mit dem Innenbereich des Filterkopfes und dem sich anschließenden Abflußrohr 2 verbunden.

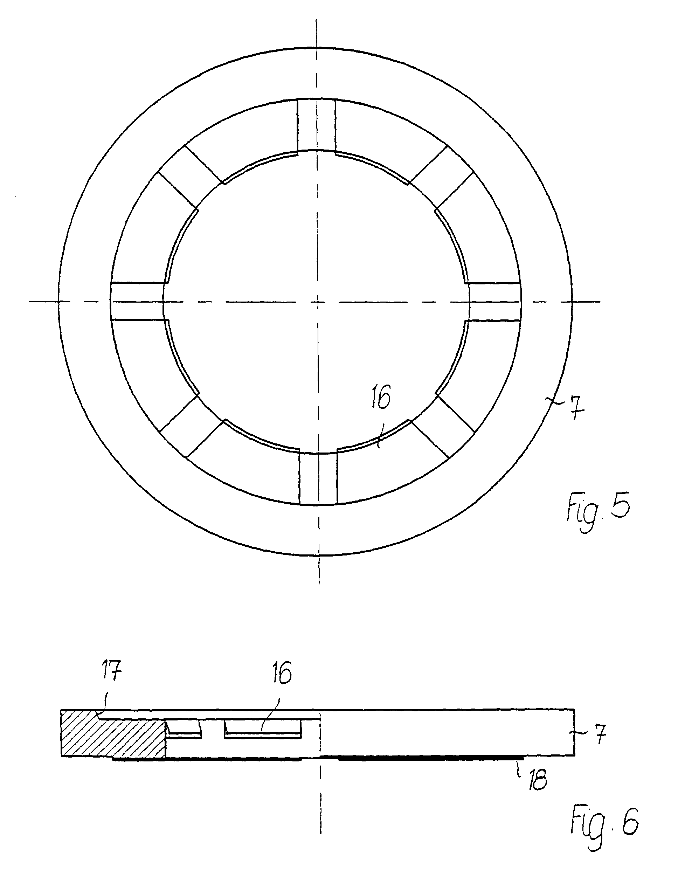

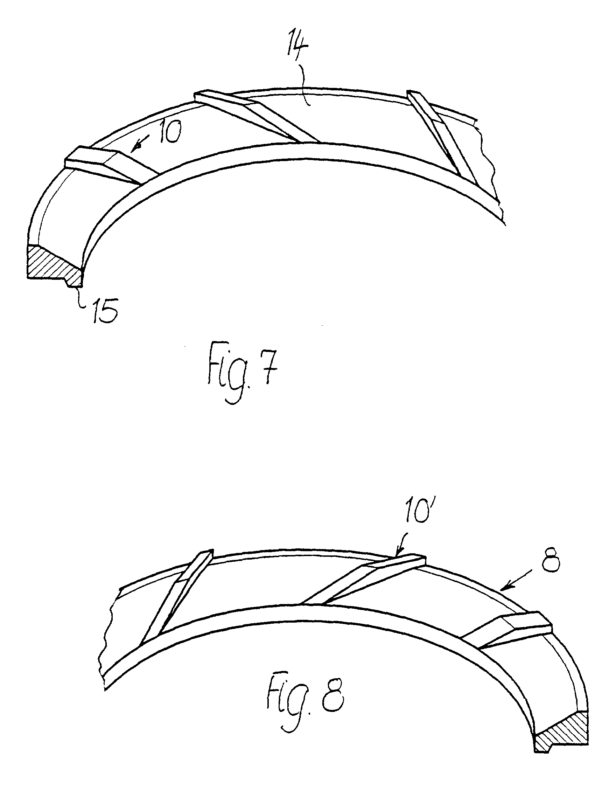

Der in Fig. 5 und 6 dargestellte Auflageflansch 7 wird zur Montage über das Abflußrohr 2 geschoben, bis an seiner Innenseite vorgesehene Rastnasen 16 in die Nut 11 des Ringbereichs 6 einrasten. An der den Lamellen 8 zugewandten Oberfläche weist der Auflageflansch 7 einen Zentriersitz 17 für die Lamellen 8 auf. An der Unterseite ist ein Ansatz 18 vorgesehen, der eine großflächige Anlage des Düsenkopfes an dem nicht dargestellten Filterboden verhindert.

Aus Figuren 7 und 8 sind die unterschiedlichen Neigungsrichtungen der Schaufeln 10 und 10' auf einander benachbarten Lamellen 8 ersichtlich. Sie bewirken eine gegenläufige Drehrichtung benachbarter Lamellen 8 bei gleicher Durchströmungsrichtung der Filterdüse. Die Innenkanten der Schaufeln 10 und 10' sind leicht geneigt derart ausgebildet, daß die Zentrierrippe 15 die jeweils darunterliegenden Schaufeln 10 bzw. 10' eingreifen und auf deren Innenseite anliegen kann.

## Patentansprüche

1. Filterdüse mit einem Düsenkopf (1) und einem Abflußrohr (2), bei der der Düsenkopf einen oberen Abschlußflansch (4) und einen unteren Auflageflansch (7) aufweist, mit zwischen Abschlußflansch (4) und Auflageflansch (7) angeordneten, um eine zentrale Längsachse (2a) drehbar gelagerten Lamellen (8), wobei benachbarte Lamellen (8) über angeformte Abstandshalter umlaufende Ringspalte (9) miteinander bilden,
dadurch gekennzeichnet,
daß die Abstandshalter als Schaufeln (10; 10') ausgebildet sind, deren senkrechte Längsmittelebenen (10a) gegenüber durch die zentrale Längsachse (2a) und jeweils eine Schaufel (10; 10') verlaufenden Radialebenen gleichsinnig geneigt sind.

2. Filterdüse nach Anspruch 1,
dadurch gekennzeichnet,
daß die Schaufeln (10; 10') auf jeder Lamelle sämtliche um den gleichen Betrag geneigt sind.

3. Filterdüse nach Anspruch 1 oder 2,
dadurch gekennzeichnet,
daß die Schaufeln (10; 10') aufeinanderfolgender Lamellen (8) gegensinnig geneigt sind.

4. Filterdüse nach einem oder mehreren der Ansprüche 1 bis 3,
dadurch gekennzeichnet,
daß die Lamellen (8) an ihren Innenseiten umlaufende Zentrierrippen (15) aufweisen, die zusammen mit einwärts weisenden Gegenflächen der Schaufeln (10; 10') benachbarter Lamellen (8) eine formschlüssige Anlage bilden.

5. Filterdüse nach einem oder mehreren der Ansprüche 1 bis 4,
dadurch gekennzeichnet,
daß sich die Ringspalte (9) in radialer Richtung einwärts vergrößern.

## Claims

1. Filter nozzle with a nozzle head (1) and an outflow pipe (2) in which the nozzle head has an upper closure flange (4) and a lower bearing flange (7), with vanes (8) mounted between the closure flange (4) and the bearing flange (7) and positioned to rotate about a central longitudinal axis (2a) wherein adjoining vanes (8) form together through moulded spacers circumferential ring gaps (9)
characterised in that
the spacers are formed as blades (10, 10') whose perpendicular longitudinal centre planes (10a) are inclined in the same direction relative to the radial planes running through the central longitudinal axis (2a) and each one blade (10, 10').

2. Filter nozzle according to claim 1
characterised in that
the blades (10, 10') on each vane are all inclined by the same amount.

3. Filter nozzle according to claim 1 or 2
characterised in that
the blades (10, 10') of successive vanes (8) are inclined in opposite directions.

4. Filter nozzle according to one or more of claims 1 to 3
characterised in that
the vanes (8) have on their insides circumferential centring ribs (15) which together with inward pointing counter faces of the blades (10; 10') form a positive-locking contact bearing.

5. Filter nozzle according to one or more of claims 1 to 4
characterised in that
the ring gaps (9) increase inwards in the radial direction.

## Revendications

1. Buse de filtre c omprenant une tête (1) et un ube d'écoulement (2), la tête présentant une bride feinte supérieure (7) et une bride de butée inférieure (7) ainsi que des lamelles (8) montées entre la bride (4) et la bride de butée (7) et tournant sur un axe longitudinal central (2a), un interstice annulaire, continu (9) étant formé entre les lamelles contiguës (8), à l'aide d'écarteurs faisant corps avec elles,
caractérisée en ce que
les écarteurs sont conçus en forme de pales (10; 10') dont les plans médians longitudinaux, verticaux (10a) sont inclinés de même sens par rapport à des plans radiaux qui traversent respectivement l'axe longitudinal, central (2a) et une pale.

2. Buse de filtre selon la revendication 1,
caractérisée en ce que
toutes les pales (10; 10') de chaque lamelle sont inclinées de la même valeur.

3. Buse de filtre selon la revendication 1 ou 2,
caractérisée en ce que
les pales (10; 10') de lamelles (8) se succédant sont inclinées inversement.

4. Buse de filtre selon une ou plusieurs revendication/s 1 à 3,
caractérisée en ce que
les lamelles (8) présentent, sur leur surface interne, des nervures de centrage (15) continues qui forment avec les contre-surfaces, orientées vers l'intérieur, des pales (10; 10') de lamelles contiguës (8) un dispositif de butée à engagement géométrique.

5. Buse de filtre selon une ou plusieurs revendication/s 1 à 4,
caractérisée en ce que
l'interstice annulaire (9) s'agrandit vers l'intérieur, dans le sens radial.
